# EUROPÄISCHE PATENTSCHRIFT

(11) **EP 1 192 611 B1**
(45) Veröffentlichungstag und Bekanntmachung des Hinweises auf die Patenterteilung: **25.02.2015**
(21) Anmeldenummer: 00942046.4
(22) Anmeldetag: 09.06.2000
(51) Int. Cl.: G07F 19/00

(54) **VERFAHREN ZUM ÜBERMITTELN EINES CODES**
METHOD FOR TRANSMITTING A CODE
PROCEDE DE TRANSMISSION D'UN CODE

(30) Priorität: 10.06.1999 DE 19926472
(43) Veröffentlichungstag der Anmeldung: 03.04.2002
(73) Patentinhaber: PayPal, Inc., Mountain View, California 94041 (US)
(72) Erfinder: HOGL, Christian, D-80469 München (DE); GUNDEL, Josef, D-85609 Aschheim (DE)
(74) Vertreter: Müller-Boré & Partner Patentanwälte PartG mbB
(86) Internationale Anmeldenummer: PCT/EP2000/005359
(87) Internationale Veröffentlichungsnummer: WO 2000/077754

(56) Entgegenhaltungen:
- WO-A-99/08242
- US-A- 5 870 456
- US-A- 5 883 810

## Beschreibung

Die vorliegende Erfindung betrifft ein Verfahren zum Übermitteln eines Codes an einen Nutzer.

Herkömmlicherweise vergeben Firmen, die Dienstleistungen anbieten oder Waren verkaufen, persönliche Codes an die Nutzer, die die Dienstleistungen in Anspruch nehmen wollen oder die Waren erwerben wollen, damit diese sich gegenüber den Firmen ohne großen Aufwand identifizieren können. Des weiteren vergeben beispielsweise Geldinstitute persönliche Identifikationsnummern (PIN), damit ihre Kunden über Geldautomaten Geld abheben können oder über Computer Überweisungen tätigen, Daueraufträge einrichten oder sonstige Dienstleistungen des Geldinstituts in Anspruch nehmen können. Wenn ein Nutzer erstmalig Verbindung zu einer solchen Firma aufnimmt, ergibt sich das Problem, daß ihm sein persönlicher Code sicher und mit geringem Aufwand übermittelt werden muß. Herkömmlicherweise wird einem neuen Nutzer sein persönlicher Code persönlich übergeben oder per Post zugeschickt. Beides sind zwar relativ sichere Übermittlungswege, jedoch ist der Aufwand, der für die Übermittlung nötig ist, relativ groß. Entweder muß ein spezieller Brief angefertigt werden, bei dem es Dritten nicht möglich ist, Kenntnis von dem Code zu erlangen, ohne den Brief zu öffnen, oder der Nutzer muß persönlich bei einem Mitarbeiter der Firma, der die Identität des Nutzers beispielsweise über seinen Personalausweis prüft, erscheinen. Des weiteren übermitteln insbesondere Online-Dienstleister persönliche Codes per e-Mail. Dies ist zwar ein einfacher Übermittlungsweg, jedoch ein sehr unsicherer.

Wenn der persönliche Code an den Nutzer übermittelt wurde, ergibt sich ferner das Problem, wie der spätere Zahlungsverkehr mit dem Nutzer abgewickelt werden kann, wenn dieser Dienstleistungen in Anspruch nimmt oder Waren erwirbt. Als besonders vorteilhafte Abwicklung des Zahlungsverkehrs hat sich das sogenannte Bankeinzugsverfahren erwiesen. Dabei erklärt sich der Nutzer damit einverstanden, daß die Firma, deren Dienstleistungen er in Anspruch nimmt oder deren Waren er erwirbt, den entsprechenden Geldbetrag von seinem Konto abbucht, ohne daß er nochmals die Zustimmung für jede einzelne Abbuchung geben muß. Bei dem Einzugsverfahren teilt die abbuchende Firma dem Geldinstitut des Nutzers dessen Verbindungsdaten zu diesem Geldinstitut und den abzubuchenden Geldbetrag mit. Dies kann besonders einfach über einen elektronischen Datenträger wie z. B. eine Diskette oder eine Online-Datenfernverbindung erfolgen. Das Geldinstitut prüft die jeweiligen Geldinstitut-Verbindungsdaten und bucht bei positiver Prüfung den entsprechenden Geldbetrag von dem Konto des Nutzers ab und schreibt ihn der abbuchenden Firma gut. Bei diesem Einzugsverfahren ergibt sich für die abbuchende Firma das Problem, daß sie sicherstellen muß, daß alle an das Geldinstitut übermittelten Daten korrekt sind. Führen beispielsweise die Geldinstitut-Verbindungsdaten nicht zu einer gültigen Verbindung zu einem Konto, führt das Geldinstitut die Abbuchung nicht aus und stellt der Firma relativ hohe Gebühren in Rechnung. Bei neuen Nutzern stellt sich somit das Problem, daß neben der Übermittlung des persönlichen Codes an den Nutzer dessen Geldinstitut-Verbindungsdaten geprüft werden müssen, damit der spätere Zahlungsverkehr mit dem neuen Nutzer problemlos abgewickelt werden kann. Eine solche Prüfung ist insbesondere für eine Firma, die mit dem neuen Nutzer nicht persönlich in Kontakt kommt oder z. B. kurzzeitig über seine Bank- oder Kreditkarte zur Prüfung verfügen kann, sehr aufwendig und schwierig. In der Regel wird deshalb die Prüfung der Geldinstitut-Verbindungsdaten eines neuen Nutzers nicht durchgeführt und nachteilhafterweise ein Fehlbuchungs- und Mißbrauchsrisiko eingegangen.

Es ist somit die Aufgabe der vorliegenden Erfindung ein Verfahren zum Übermitteln eines Codes an einen Nutzer bereitzustellen, das sicher ist, einen möglichst geringen Aufwand bei der Übermittlung verursacht und damit kostengünstig ist, und durch das ferner die Geldinstitut-Verbindungsdaten des Nutzers geprüft werden können.

Diese Aufgabe wird durch das in Anspruch 1 angegebene Verfahren gelöst, wobei sich vorteilhafte Ausgestaltungen aus den Unteransprüchen ergeben.

Erfindungsgemäß überträgt der Nutzer seine Geldinstitut-Verbindungsdaten an eine Code-Zuteilungseinheit. Die Zuteilungseinheit überweist einen Geldbetrag an das vom Nutzer angegebene Geldinstitut und/oder bucht einen Geldbetrag von dem vom Nutzer angegebenen Geldinstitut ab, wobei die Verbindungsdaten sowie als Zusatzinformation bei dieser Überweisung und/oder Abbuchung der zu übermittelnde Code angegeben wird. Nachdem das Geldinstitut die Überweisung und/oder Abbuchung vorgenommen hat, leitet es einen Beleg für die Überweisung und/oder Abbuchung zusammen mit der Zusatzinformation an den Nutzer weiter.

Vorteilhaft an dem erfindungsgemäßen Verfahren ist, daß die Übermittlung sehr sicher ist. Das Geldinstitut garantiert die Vertraulichkeit des Übermittlungsweges, da das Geldinstitut keiner nicht zur Vertraulichkeit verpflichteten Person die Überweisungs- bzw. Abbuchungsdaten zur Verfügung stellen wird, und des weiteren nur der Nutzer persönlich Zugang zu seinen Überweisungs- bzw. Abbuchungsbelegen hat.

Des weiteren ist es bei dem erfindungsgemäßen Verfahren nachprüfbar, daß an die angegebenen Geldinstitut-Verbindungsdaten der Code über die Zusatzinformation der Überweisung bzw. Abbuchung zugestellt worden ist. Das Geldinstitut übernimmt hierbei die Funktion eines dritten unabhängigen Garanten. Damit kann der Nutzer später den Zugang nicht mehr abstreiten. Das erfindungsgemäße Übermittlungsverfahren entspricht somit im wesentlichen einer Übermittlung durch eingeschriebenen Brief, es ist jedoch nicht so teuer und weniger aufwendig.

Bei einer vorteilhaften Ausbildung der Erfindung prüft eine Verifikationseinheit des Geldinstituts die Daten der Überweisung und/oder Abbuchung der Zuteilungseinheit, bevor es die Überweisung und/oder Abbuchung vornimmt, darauf, ob die angegebenen Daten zu einer gültigen Verbindung mit dem Nutzer führen. Falls die Prüfung positiv ausfällt, führt das Geldinstitut die Überweisung und/oder Abbuchung der Zuteilungseinheit aus. Durch diese Maßnahme kann sichergestellt werden, daß eine Überweisung und/oder Abbuchung nur dann erfolgt, wenn der Nutzer auch eine gültige Verbindung zu dem Geldinstitut hat. Falls beispielsweise sein Konto gesperrt ist oder das angegebene Konto dieses Nutzers gar nicht existiert, kommt es zu keiner Fehlbuchung. Damit ist es bei Verwendung des erfindungsgemäßen Verfahrens nicht mehr erforderlich, die Geldinstitut-Verbindungsdaten des Nutzers separat zu prüfen oder kostspielige Fehlbuchungen bei einem späteren Einzugsverfahren in Kauf zu nehmen.

Vorteilhafterweise überträgt die Verifikationseinheit des Geldinstituts, falls die Prüfung der Geldinstitut-Verbindungsdaten negativ ausfällt, dieses Ergebnis an die Code-Zuteilungseinheit. Auf diese Weise kann in der Code-Zuteilungseinheit entschieden werden, daß vorerst kein persönlicher Code an den Nutzer vergeben wird und gegebenenfalls nochmals mit ihm auf anderem Weg Kontakt aufgenommen wird.

Vorteilhafterweise überträgt der Nutzer des weiteren Identifikationsdaten an die Zuteilungseinheit. Diese Identifikationsdaten werden bei der Überweisung und/oder Abbuchung zusammen mit den Verbindungsdaten angegeben. Die Verifikationseinheit prüft die Identifikationsdaten dann zusammen mit den Verbindungsdaten. Dadurch kann vorteilhafterweise nicht nur geprüft werden, ob die angegebenen Verbindungsdaten zu einer gültigen Verbindung führen, sondern auch ob die Verbindung mit dem angegebenen Nutzer besteht.

Die Übertragung der Identifikations- und/oder Geldinstitut-Verbindungsdaten des Nutzers, die Überweisung und/oder Abbuchung des Geldbetrags und/oder die Weiterleitung des Überweisungs- bzw Abbuchungsbeleges mit der Zusatzinformation kann vorteilhafterweise über eine Datenfernverbindung erfolgen. Hierdurch wird die Durchführung des erfindungsgemäßen Verfahrens sehr vereinfacht. Des weiteren kann bei der Nutzung von Datenfernverbindungen der Code besonders schnell an den Nutzer übermittelt werden. Als Datenfernverbindung kann beispielsweise ein Computernetzwerk und/oder eine automatische Telefonschnittstelle, wie z. B. ein Telefon- Sprachcomputer ("interactive voice response") verwendet werden.

In einem vorteilhaften Ausführungsbeispiel des erfindungsgemäßen Verfahrens setzt sich der Code aus zumindest zwei Teilcodes zusammen, wobei ein Teilcode mittels des erfindungsgemäßen Verfahrens bei der Überweisung und/oder Abbuchung als Zusatzinformation übermittelt wird und ein anderer Teilcode auf einem anderen Übertragungsweg dem Nutzer übermittelt wird. Diese Ausführungsform hat den Vorteil, daß, selbst wenn Dritte Zugang zu dem bei dem erfindungsgemäßen Verfahren übermittelten Code erhalten, sie diesen später nicht widerrechtlich nutzen können, da sich der eigentliche später genutzte Code aus den zumindest zwei Teilcodes zusammensetzt. Selbst wenn der andere Teilcode auf einem relativ unsicheren Übertragungsweg, wie beispielsweise am Telefon oder über das Internet übermittelt wird, ist es äußerst unwahrscheinlich, daß unberechtigte Dritte Kenntnis von beiden Teilcodes erhalten. Diese Ausführungsform stellt somit eine sehr sichere Übermittlung des Codes bereit. Vorteilhafterweise enthalten die Identifikationsdaten, die der Nutzer an die Zuteilungseinheit überträgt, zumindest den vollständigen Namen des Nutzers. Ferner umfassen vorteilhafterweise die Verbindungsdaten zu dem Geldinstitut, die der Nutzer an die Zuteilungseinheit überträgt, zumindest die Konto- oder Kreditkartennummer des Nutzers und/oder den Namen oder die Bankleitzahl des Geldinstituts oder des Kreditkartenbetreibers.

Des weiteren kann das Geldinstitut auch einen Beleg für die Überweisung und/oder Abbuchung an die Zuteilungseinheit weiterleiten. Dies hat den Vorteil, daß über die Belege des Geldinstituts nicht nur der Nutzer den Zugang des Codes nachweisen kann, sondern auch der Betreiber der Zuteilungseinheit. Diese Ausbildung des erfindungsgemäßen Verfahrens entspricht damit im wesentlichen einer Übermittlung durch eingeschriebenen Brief mit Rückschein unter Vermeidung der mit der Briefzustellung verbundenen Nachteile.

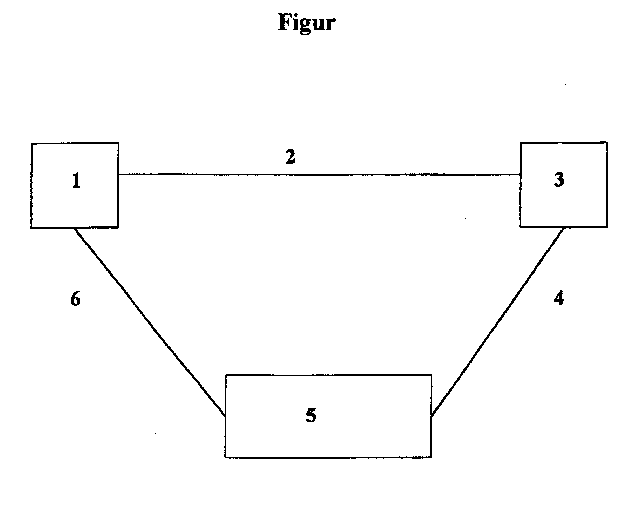

Im folgenden werden Ausführungsformen des erfindungsgemäßen Verfahrens detailliert unter Bezugnahme auf die beigefügte Zeichnung erläutert.

Die Figur zeigt schematisch ein System, mit dem das erfindungsgemäße Verfahren durchgeführt werden kann.

Mit dem Bezugszeichen 1 ist eine Eingabeeinheit eines Nutzers bezeichnet, der einen Code beispielsweise von einer Firma erhalten möchte, um Dienstleistungen von dieser Firma in Anspruch zu nehmen. Als Eingabeeinheit kann beispielsweise ein Computer oder eine Telefonanlage dienen. Bei der Firma befindet sich eine Code-Zuteilungseinheit 3. Diese Zuteilungseinheit 3 kann beispielsweise der Zentralrechner der Firma sein oder aus mehreren verbundenen Einzelrechnern bestehen. Der zu vergebende Code kann jede Information sein, die einem Nutzer zur Verfügung gestellt wird, damit er sich gegenüber irgendeiner Stelle identifizieren kann. Der Code kann ein dauerhafter persönlicher Zugangscode wie beispielsweise eine PIN sein. Des weiteren kann der Code ein einmal gültiger Code wie eine Transaktionsnummer sein.

Die Eingabeeinheit 1 des Nutzers und die Zuteilungseinheit 3 der Firma sind über eine Datenfernverbindung 2 miteinander verbunden. Die Datenfernverbindung 2 kann beispielsweise ein Computernetzwerk wie das Internet oder eine automatische Telefonschnittstelle wie z. B. ein Telefon-Sprachcomputer sein. Der Nutzer überträgt über die Eingabeeinheit 1 mittels der Datenfernverbindung 2 seine Geldinstitut-Verbindungsdaten an die Zuteilungseinheit 3. Unter Geldinstitut-Verbindungsdaten werden hier solche Daten verstanden, die in irgendeiner Weise einen Zahlungsverkehr mit dem Nutzer ermöglichen. Unter Geldinstitut wird hier allgemein eine Instanz verstanden, über die ein Zahlungsverkehr abgewickelt werden kann. Selbstverständlich umfaßt der Begriff Geldinstitut auch einen Verbund von Einzelinstituten, wie z. B. das Geldinstitut des Nutzers, dasjenige der Firma und ggf. eine Zentralbank, über die der Zahlungsverkehr abgewickelt wird. Der Zahlungsverkehr kann dabei beispielsweise über ein Konto bei einem Geldinstitut, wie einer Bank oder einer Sparkasse, oder über ein Kreditkartenkonto erfolgen. Als Verbindungsdaten gibt der Nutzer seine Konto- oder Kreditkartennummer und den Namen oder die Bankleitzahl seines Geldinstituts oder seines Kreditkartenbetreibers an.

Daraufhin überweist die Zuteilungseinheit 3 einen Geldbetrag an das vom Nutzer angegebene Geldinstitut unter Angabe der Geldinstitut-Verbindungsdaten und gegebenenfalls der Identifikationsdaten des Nutzers. Die Überweisung kann nach Übertragung der Daten des neuen Nutzers automatisch erfolgen. Des weiteren wird als Zusatzinformation bei dieser Überweisung der zu übermittelnde Code mit übermittelt. Unter Zusatzinformation wird hier eine Information verstanden, die in irgendeiner Weise bei der Überweisung mit übermittelt wird. Sie kann dabei unverschlüsselt oder verschlüsselt, zusätzlich zu den Überweisungsdaten oder in diesen enthaltend übermittelt werden.

Z. B. können die Übermittlungen auf folgende Weisen geschehen. Bei einer Überweisung an ein Geldinstitut kann ein Verwendungszweck angegeben werden. Als solcher kann der zu übermittelnde Code angegeben werden. Vorteilhafterweise wird ein sehr geringer Geldbetrag wie z. B. EURO 1,- überwiesen. Ferner kann der zu übermittelnde Code in dem überwiesenen Geldbetrag enthalten sein. Soll beispielsweise der Code 1498 übermittelt werden, könnten EURO 14,98 überwiesen werden. Später kann der überwiesene Geldbetrag dem neuen Nutzer wieder in Rechnung gestellt werden. Die Überweisung kann über eine Datenfernverbindung 4 zwischen der Zuteilungseinheit 3 und einem Geldinstitut 5 erfolgen.

Das Geldinstitut 5 besitzt vorteilhafterweise eine Verifikationseinheit, die die Überweisungsdaten der Zuteilungseinheit 3 darauf prüft, ob die angegebenen Daten zu einer gültigen Verbindung mit dem Nutzer führten. Es wird z.B. geprüft, ob die angegebene Kontonummer existiert und gegebenenfalls auch ob sie für den angegebenen Nutzer existiert. Fällt diese Prüfung positiv aus, führt das Geldinstitut 5 die Überweisung der Zuteilungseinheit 3 aus und schreibt dem Konto des Nutzers den entsprechenden Geldbetrag gut. Einen Beleg für die Überweisung leitet das Geldinstitut 5 zusammen mit der Zusatzinformation an den Nutzer über eine weitere Verbindung 6 weiter, die auch eine Datenfernverbindung 6 wie ein Computernetzwerk oder eine automatische Telefonschnittstelle sein kann. Des weiteren ist es möglich, den Beleg über einen Kontoauszugsdrucker an den Nutzer weiterzuleiten.

Zusätzlich kann das Geldinstitut 5 auch einen Beleg für die Überweisung an die Zuteilungseinheit 3 weiterleiten, so daß auch der Betreiber der Zuteilungseinheit 3 den Zugang des Codes nachweisen kann.

Durch das erfindungsgemäße Verfahren ist es möglich, einem neuen Nutzer besonders einfach seinen persönlichen Code zu übermitteln. Der Nutzer muß nur wissen, wie er seinen Code der Zusatzinformation der Überweisung entnehmen kann. Dies kann von der Firma, die den Code vergibt, oder von einer anderen Stelle z. B. über das Internet allgemein zugänglich verbreitet werden.

Gleichzeitig wird bei dieser Übermittlung geprüft, ob die vom Nutzer angegebenen Geldinstitut-Verbindungsdaten korrekt sind, da nur in diesem Fall die Überweisung an ihn erfolgt. Dies ist für den späteren Zahlungsverkehr zwischen dem Nutzer und einer Firma, die ihm Dienstleistungen zur Verfügung stellt oder Waren verkauft, besonders wichtig. Ferner erhält der Nutzer seinen Code sehr schnell, da die Zeit, die die Übermittlung in Anspruch nimmt, nur durch die Zeit bestimmt wird, die das Geldinstitut 5 für die Überweisung benötigt.

Es wird bemerkt, daß unter Datenfernverbindung neben einer Online-Verbindung auch eine Offline-Verbindung verstanden wird, solange ein Datentransfer zwischen den entsprechenden Einheiten erfolgt. Z. B. können auch Datenträger versandt werden.

Falls sich bei der Prüfung der Verifikationseinheit des Geldinstituts 5 ergibt, daß bei der Überweisung keine gültigen Verbindungsdaten angegeben wurden, führt das Geldinstitut 5 die Überweisung nicht aus. Vorteilhafterweise wird dies über die Datenfernverbindung 4 an die Prüfungs- und Zuteilungseinheit übermittelt. In diesem Fall kann dann in der Zuteilungseinheit entschieden werden, ob z. B. über die Datenfernverbindung 2 nochmals Kontakt mit dem Nutzer 1 aufgenommen werden soll, oder ob kein persönlicher Code an diesen Nutzer vergeben werden soll.

In einer weiteren Ausbildung des erfindungsgemäßen Verfahrens setzt sich der Code, der später von dem neuen Nutzer benutzt werden soll, aus zwei oder mehr Teilcodes zusammen. Beispielsweise stellt der erste Teilcode die vier ersten Ziffern des eigentlichen Codes dar und der zweite Teilcode die vier letzten Ziffern. Der eigentliche Code könnte sich beispielsweise auch aus der Multiplikation der beiden Teilcodes oder durch irgendeine andere dem Nutzer bekannte Rechenoperation ergeben. Ein Teilcode wird mit dem erfindungsgemäßen Verfahren an den Nutzer übermittelt und der andere oder die anderen Teilcodes über einen anderen Übertragungsweg, der gegebenenfalls nicht so sicher ist. Beispielsweise kann der zweite Teilcode über ein Computernetzwerk wie das Internet an den Nutzer gesandt werden.

Diese Ausgestaltung des Verfahrens erhöht nochmals die Sicherheit, da, selbst wenn eine dritte unberechtigte Person Zugang zu dem mit dem erfindungsgemäßen Verfahren übermittelten Teilcode erhält, sie noch keine Kenntnis von dem eigentlichen später verwendeten Code hat. Daß sie Kenntnis von beiden oder allen Teilcodes erhält, ist äußerst unwahrscheinlich.

In einem weiteren Ausführungsbeispiel der Erfindung wird der zu übermittelnde Code anstatt durch eine Überweisung durch eine Abbuchung eines geringfügigen Geldbetrags vom dem vom neuen Nutzer angegebenen Geldinstitut durchgeführt. Auch bei der Abbuchung werden die Verbindungsdaten sowie als Zusatzinformation der zu übermittelnde Code angegeben. Ansonsten entspricht das Verfahren dieses Ausführungsbeispiels dem oben beschriebenen, wobei stets anstatt einer Überweisung eine Abbuchung durchgeführt wird.

Ferner kann auch sowohl eine Überweisung als auch eine Abbuchung des gleichen Geldbetrags durchgeführt werden. Dies erhöht zwar geringfügig den Aufwand, führt aber zu einem Ausgleich der Zahlungen an den neuen Nutzer.

## Patentansprüche

1. Verfahren zum Übermitteln eines Codes an einen Nutzer mittels einer Code-Zuteilungseinheit (3), die folgenden Schritte umfassend:
- Übertragen von Geldinstitut-Verbindungsdaten des Nutzers über eine als Computer oder Telefonanlage ausgebildete Eingabeeinheit (1) an die Zuteilungseinheit (3), wobei die Zuteilungseinheit (3) ein Zentralrechner ist oder aus mehreren verbundenen Einzelrechner besteht;
- Automatisches Überweisen eines Geldbetrags an ein vom Nutzer angegebenes Geldinstitut (5) durch die Zuteilungseinheit (3) und/oder Automatisches Abbuchen eines Geldbetrags von einem vom Nutzer angegebenen Geldinstitut (5) durch die Zuteilungseinheit (3), wobei die Verbindungsdaten sowie als Zusatzinformation bei dieser Überweisung und/oder dieser Abbuchung der zu übermittelnde Code angegeben wird, wobei der Code Information umfaßt, welche dem Nutzer zur Verfügung gestellt wird, um sich gegenüber einer Stelle identifizieren zu können;
- Weiterleiten eines Belegs für die Überweisung und/oder für die Abbuchung zusammen mit der Zusatzinformation an den Nutzer durch das Geldinstitut (5) über eine automatische Telefonschnittstelle und/oder einen Kontoauszugsdrucker.

2. Verfahren nach Anspruch 1, **dadurch gekennzeichnet, daß**, bevor das Geldinstitut (5) die Überweisung und/oder Abbuchung ausführt, eine Verifikationseinheit des Geldinstituts (5) die Daten der Überweisung und/oder Abbuchung der Zuteilungseinheit (3) darauf prüft, ob die angegebenen Daten zu einer gültigen Verbindung mit dem Nutzer führen, und, falls die Prüfung positiv ausfällt, das Geldinstitut (5) die Überweisung und/oder Abbuchung der Zuteilungseinheit (3) ausführt.

3. Verfahren nach Anspruch 2, **dadurch gekennzeichnet, daß**, falls die Prüfung der Verifikationseinheit negativ ausfällt, diese dieses Ergebnis an die Zuteilungseinheit (3) überträgt.

4. Verfahren nach einem der Ansprüche 2 oder 3, **dadurch gekennzeichnet, daß** der Nutzer des weiteren Identifikationsdaten an die Zuteilungseinheit (3) überträgt, daß die Zuteilungseinheit (3) bei der Überweisung und/oder Abbuchung die Identifikationsdaten zusammen mit den Verbindungsdaten angibt und daß die Verifikationseinheit die Identifikationsdaten zusammen mit den Verbindungsdaten prüft.

5. Verfahren nach einem der vorstehenden Ansprüche, **dadurch gekennzeichnet, daß** die Übertragung der Identifikations- und/oder Geldinstitut-Verbindungsdaten des Nutzers und/oder die Überweisung und/oder Abbuchung des Geldbetrags über eine Datenfernverbindung (2) erfolgt.

6. Verfahren nach einem der vorstehenden Ansprüche, **dadurch gekennzeichnet, daß** sich der Code aus zumindest zwei Teilcodes zusammensetzt und daß ein Teilcode bei der Überweisung und/oder Abbuchung als Zusatzinformation übermittelt wird und ein anderer Teilcode auf einem anderen Übertragungsweg an den Nutzer übermittelt wird.

7. Verfahren nach einem der vorstehenden Ansprüche, **dadurch gekennzeichnet, daß** die Identifikationsdaten zumindest den vollständigen Namen des Nutzers umfassen.

8. Verfahren nach einem der vorstehenden Ansprüche, **dadurch gekennzeichnet, daß** die Verbindungsdaten zu dem Geldinstitut (5) zumindest die Konto- und/oder die Kreditkartennummer des Nutzers und/oder den Namen oder die Bankleitzahl des Geldinstitutes oder des Kreditkartenbetreibers umfassen.

9. Verfahren nach einem der vorstehenden Ansprüche, **dadurch gekennzeichnet, daß** das Geldinstitut (5) auch einen Beleg für die Überweisung und/oder Abbuchung an die Zuteilungseinheit (3) weiterleitet.

## Claims

1. Method for transmitting a code to a user by means of a code allocation unit (3), comprising the following steps:
- transmitting of the user's financial institution's connection data via an input unit (1), designed as a computer or telephone system, to the allocation unit (3), wherein the allocation unit (3) is a host computer or comprises several connected stand-alone computers;
- automatic transfer of a sum of money to a financial institution (5) specified by the user by means of the allocation unit (3) and/or automatic debiting of a sum of money from a financial institution (5) specified by the user by means of the allocation unit (3), wherein the connection data is specified, as well as the code to be transmitted as additional information on this transaction and/or this debit, wherein the code contains information which is made available to the user in order to be able to identify himself with respect to an entity;
- forwarding of a slip for the transfer and/or debit together with the additional information to the user by the financial institution (5) by means of an automatic telephone interface and/or a statement printer.

2. Method according to claim 1, **characterized in that** before the financial institution (5) carries out the transfer and/or the debit, a verification unit of the financial institution (5) verifies the transfer and/or debit data from the allocation unit (3) to ascertain whether the data specified leads to a valid connection with the user and, if the result of the verification is positive, the financial institution (5) carries out the transfer and/or debit of the allocation unit (3).

3. Method according to claim 2, **characterized in that** if the result of the verification by the verification unit is negative, the latter transfers this result to the allocation unit (3).

4. Method according to one of claims 2 or 3, **characterized in that** the user further transfers identification data to the allocation unit (3), the allocation unit (3) specifies the identification data together with the connection data during the transfer and/or debit, and the verification unit verifies the identification data together with the connection data.

5. Method according to one of the previous claims, **characterized in that** the transfer of the user's identification data and/or financial institution connection data and/or the transfer and/or debit of the sum of money is carried out via a remote data connection (2).

6. Method according to one of the previous claims, **characterized in that** the code consists of at least two sub-codes and that one sub-code is transmitted as additional information during the transfer and/or debit and another sub-code is transmitted to the user on a different transmission path.

7. Method according to one of the previous claims, **characterized in that** the identification data at least comprises the complete name of the user.

8. Method according to one of the previous claims, **characterized in that** the connection data to the financial institution (5) includes at least the account and/or credit card number of the user and/or the name or the bank sort code of the financial institution or of the credit card provider.

9. Method according to one of the previous claims, **characterized in that** the financial institution (5) also forwards a slip for the transfer and/or debit to the allocation unit (3).

## Revendications

1. Procédé de transmission d'un code à un utilisateur au moyen d'un module d'attribution de code (3), qui comprend les étapes suivantes :
- transfert de données de connexion d'établissement financier de l'utilisateur par le biais d'un module de saisie (1) réalisé en tant qu'ordinateur ou installation téléphonique au module d'attribution (3), dans lequel le module d'attribution (3) est un ordinateur central ou se compose de plusieurs ordinateurs individuels connectés ;
- virement automatique d'un montant à un établissement financier (5) indiqué par l'utilisateur par le module d'attribution (3) et/ou prélèvement automatique d'un montant par un établissement financier (5) indiqué par l'utilisateur par le module d'attribution (3), dans lequel les données de connexion sont indiquées aussi bien en tant qu'information supplémentaire lors de ce virement et/ou de ce prélèvement du code à transmettre, dans lequel le code comprend une information qui est à la disposition de l'utilisateur pour pouvoir s'identifier par rapport à un organisme ;
- acheminement d'un reçu pour le virement et/ou pour le prélèvement avec l'information supplémentaire à l'utilisateur par l'établissement financier (5) par le biais d'une interface téléphonique automatique et/ou d'une imprimante de relevés de compte.

2. Procédé selon la revendication 1, **caractérisé en ce qu'**avant que l'établissement financier (5) n'exécute le virement et/ou prélèvement, un module de vérification de l'établissement financier (5) contrôle les données du virement et/ou prélèvement du module d'attribution (3) quant au fait que les données indiquées conduisent à une connexion valide avec l'utilisateur et, au cas où le contrôle s'avère positif, l'établissement financier (5) exécute le virement et/ou prélèvement du module d'attribution (3).

3. Procédé selon la revendication 2, **caractérisé en ce qu'**au cas où le contrôle du module de vérification s'avère négatif, celui-ci transfère ce résultat au module d'attribution (3).

4. Procédé selon une des revendications 2 ou 3, **caractérisé en ce que** l'utilisateur transfère en outre des données d'identification au module d'attribution (3), que le module d'attribution (3) indique lors du virement et/ou prélèvement les données d'identification avec les données de connexion et que le module de vérification contrôle les données d'identification avec les données de connexion.

5. Procédé selon une des revendications précédentes, **caractérisé en ce que** le transfert des données d'identification et/ou de connexion d'établissement financier de l'utilisateur et/ou le virement et/ou prélèvement du montant s'effectue par le biais d'une connexion de données à distance (2).

6. Procédé selon une des revendications précédentes, **caractérisé en ce que** le code se compose d'au moins deux codes partiels et qu'un code partiel est transmis lors du virement et/ou prélèvement en tant qu'information supplémentaire et un autre code partiel est transmis sur un autre trajet de transfert à l'utilisateur.

7. Procédé selon une des revendications précédentes, **caractérisé en ce que** les données d'identification comprennent au moins le nom complet de l'utilisateur.

8. Procédé selon une des revendications précédentes, **caractérisé en ce que** les données de connexion à l'établissement financier (5) comprennent au moins le numéro de compte et/ou le numéro de carte de crédit de l'utilisateur et/ou le nom ou le code de banque de l'établissement financier ou du gérant de carte de crédit.

9. Procédé selon une des revendications précédentes, **caractérisé en ce que** l'établissement financier (5) achemine également un reçu pour le virement et/ou prélèvement au module d'attribution (3).
